# EUROPÄISCHE PATENTSCHRIFT

(11) **EP 2 553 822 B1**
(45) Veröffentlichungstag und Bekanntmachung des Hinweises auf die Patenterteilung: **05.07.2017**
(21) Anmeldenummer: 11714687.8
(22) Anmeldetag: 22.03.2011
(51) Int. Cl.: H04B 3/46, H04M 3/30

(54) **Vorrichtung zur Auskopplung eines auf einer Datenübertragungsleitung übertragenen Hochfrequenzsignals**
Device for extracting high frequency signal transmitted on a data transmission line
Dispositif pour extraire le signal à haute fréquence transmis sur une ligne de transmission de données

(30) Priorität: 19.08.2010 EP 10008666; 26.03.2010 EP 10003252
(43) Veröffentlichungstag der Anmeldung: 06.02.2013
(73) Patentinhaber: Deutsche Telekom AG, 53113 Bonn (DE)
(72) Erfinder: MUGGENTHALER, Peter, 64397 Modautal (DE)
(74) Vertreter: Schwöbel, Thilo K.
(86) Internationale Anmeldenummer: PCT/EP2011/001407
(87) Internationale Veröffentlichungsnummer: WO 2011/116928

(56) Entgegenhaltungen:
- US-A- 5 504 736
- US-B1- 6 624 721

## Beschreibung

Die vorliegende Erfindung betrifft eine Vorrichtung zur Auskopplung eines auf einer Datenübertragungsleitung übertragenen Hochfrequenzsignals oder von Störspannungen, insbesondere zum Zwecke der Durchführung einer Messung an der festinstallierten Datenübertragungsleitung. Datenübertragungsleitungen sind heute in millionenfacher Ausführung installiert, beispielsweise zur Versorgung von Privathaushalten oder auch von Firmen mit vergleichsweise breitbandigen Datenanschlüssen. Beispielsweise sind derzeit im Kupferdoppeladernetz der Deutschen Telekom AG in Deutschland derzeit etwa 20 Millionen DSL-Anschlüsse (Digital Subscriber Line Anschlüsse), insbesondere ADSL-Anschlüsse (Asymmetrie Digital Subscriber Line Anschlüsse) oder VDSL-Anschlüsse (Very High Bitrate Digital Subscriber Line Anschlüsse) eingerichtet. Je nach Betriebszustand und Konfiguration dieser Systeme können die an einzelnen Datenübertragungsleitungen solcher Datenübertragungsysteme messbaren spektralen Leistungsdichten (sogenannte PSD Spektren, Power Spectral Density Spektren) erheblich von der angestrebten spektralen Leistungsdichte abweichen.

Ein Beispiel des Standes der Technik kann in US5504736 gefunden werden. Bisher konnte die Vermessung von einzelnen Datenübertragungsleitungen solcher Datenübertragungsysteme lediglich unter Inkaufnahme verschiedener Nachteile realisiert werden. Diese Nachteile umfassen unter anderem eine vergleichsweise geringe Messgenauigkeit insbesondere bei der Messung der spektralen Leistungsdichte, oftmals die Notwendigkeit, dass zur Durchführung der Messung einer vorgegebenen Datenübertragungsleitung dieselbe getrennt, d.h. unterbrochen, werden muss.

Der Erfindung liegt die Aufgabe zugrunde, eine Vorrichtung zur Auskopplung eines auf einer Datenübertragungsleitung übertragenen Hochfrequenzsignals bzw. von Störspannungen bereitzustellen, die die Nachteile des Standes der Technik vermeidet oder zumindest verringert und die einfach und kostengünstig aufgebaut und herstellbar ist sowie in einfacher und effizienter Weise in der Prüfpraxis verwendbar ist.

Diese Aufgabe wird gelöst durch eine Vorrichtung zur Auskopplung eines auf einer eine erste Teilleitung und eine zweite Teilleitung aufweisenden Datenübertragungsleitung übertragenen Hochfrequenzsignals, wobei die Vorrichtung ein Abgreifmodul und ein Stromzangenmodul aufweist, wobei zur Auskopplung des Hochfrequenzsignals ein Anschluss des Abgreifmoduls an die erste und zweite Teilleitung an einem ersten Abgreifort der Datenübertragungsleitung vorgesehen ist und wobei zur Auskopplung des Hochfrequenzsignals eine Kopplung des Stromzangenmoduls an die erste Teilleitung an einem zweiten Abgreifort der Datenübertragungsleitung vorgesehen ist. Ferner wird die Aufgabe gelöst durch eine Vorrichtung zur Auskopplung eines auf einer eine erste Teilleitung (51) und eine zweite Teilleitung (52) aufweisenden Datenübertragungsleitung (50) übertragenen Hochfrequenzsignals oder von Störspannungen, wobei die Vorrichtung (10) ein Abgreifmodul (20) und ein Stromzangenmodul (30) aufweist, wobei zur Auskopplung des Hochfrequenzsignals und von Störspannungen ein Anschluss des Abgreifmoduls (20) an die erste und zweite Teilleitung (51, 52) an einem ersten Abgreifort (61) der Datenübertragungsleitung (50) vorgesehen ist und wobei
-- im Fall der Auskopplung des Hochfrequenzsignals eine Kopplung des Stromzangenmoduls (30) an die erste Teilleitung (51) an einem zweiten Abgreifort (62) der Datenübertragungsleitung (50) und
-- im Fall der Auskopplung der Störspannungen eine Kopplung des Stromzangenmoduls (30) an die erste und zweite Teilleitung (51, 52) an einem zweiten Abgreifort (62) der Datenübertragungsleitung (50)
vorgesehen ist.

Die erfindungsgemäße Vorrichtung hat den Vorteil, dass im Gegensatz zu einem üblichen Richtkoppler in geschlossener Bauweise eine unterbrechungsfreie Messung bzw. Vermessung der Datenübertragungsleitung möglich ist. Dies hat zum einen den Vorteil, dass zur Durchführung der Messung die zu vermessende Datenübertragungsleitung nicht aufgetrennt und anschließend wieder angeschlossen werden muss, so dass sich eventuell nach der Durchführung der Messung eine (nicht vermessene) andere (Anpassungs-)Konstellation ergibt. Ferner hat dies den Vorteil, dass die Maßnahme des Auftrennens und des Wiederverbindens nicht erforderlich ist, so dass die Messung zum einen genauer erfolgt (weil nach der Messung auftretende Fehlerquellen, bedingt etwa durch die Wiederverbindung vermieden werden) und zum anderen einfacher, schneller und mit geringerem Aufwand an Arbeitszeit möglich ist. Erfindungsgemäß kann die Vorrichtung sowohl zu Messung eines Hochfrequenzsignals verwendet werden als auch zur Messung von Störspannungen (bzw. irregulären Störsignalen) auf der Datenübertragungsleitung. Hierbei wird die Vorrichtung zur Auskopplung des Hochfrequenzsignals in einem sogenannten Gegentaktmodus (Differential mode) betrieben und zur Auskopplung der Störspannungen in einem sogenannten Gleichtaktmodus (Common mode). Die beiden Betriebsmodi bzw. Abgreifmodi unterscheiden sich im Wesentlichen lediglich durch die unterschiedliche Handhabung bzw. den unterschiedlichen Abgriff. Die auf der Datenübertragungsleitung zu übertragenden Hochfrequenzsignale (d.h. die Nutzsignale, beispielsweise xDSL-Signale), erzeugen auf der als Doppelader ausgeführten Datenübertragungsleitung eine Gegentaktspannung bzw. Differenzspannung zwischen der ersten Teilleitung und der zweiten Teilleitung. Für die Messung dieser Hochfrequenzsignale wird die erfindungsgemäße Vorrichtung im Gegentaktbetrieb benutzt. Mit Hilfe dieser Messung soll vorrangig die in ein Kabel eingekoppelte xDSL Sendeleistung möglichst exakt gemessen werden. Bei einer bevorzugten Ausführungsform kann aufgrund der Richtkopplerwirkung die Signalrichtung des xDSL Signals mit Hilfe eines Schalters bestimmt werden. Aufgrund vielfältiger Ursachen werden auch unerwünschte Störspannungen über verschiedene Störpfade in Telekommunikationskabel in der Regel als Gleichtakt (Common mode) eingekoppelt. Die Störspannung liegt dann zwischen der Datenübertragungsleitung (in der Regel eine Doppelader bzw. eine Kupferdoppelader) und der Masse bzw. dem Kabelmantel. Das Störpotential auf beiden Teilleitungen gegen Masse der Datenübertragungsleitung ist damit gleich; für den Gleichtakt kann man sich die Datenübertragungsleitung als eine einzige Leitung (bzw. die beiden Teilleitungen als eine einzige Leitung) vorstellen. Für die Messung dieser Störgrößen bzw. Störspannungen wird der Gleichtaktbetrieb verwendet. Bei der bevorzugten Ausführungsform mit Schalter soll vorrangig die grundsätzlich unbekannte Signalrichtung des Störsignals zur Lokalisierung des Störsenders bestimmt werden. Obwohl die Vorrichtung auch beim Gleichtaktbetrieb ähnlich hohe Messgenauigkeiten wie beim Gegentaktbetrieb gewährleisten kann, spielt die absolute Messgenauigkeit bei der Ortung der Störquelle keine entscheidende Rolle.

Die erfindungsgemäße Vorrichtung wird als Richtkoppler verwendet und wird zur Auskopplung des auf der in der Regel festinstallierten Datenübertragungsleitung übertragenen Hochfrequenzsignals oder zur Auskopplung von Störspannungen mit der Datenübertragungsleitung verbunden, wobei jedoch keinerlei Änderung an der vorgegebenen Konfiguration der Installation der Datenübertragung bedingt durch die Durchführung der Messung vorgenommen wird. Hierzu weist die erfindungsgemäße Vorrichtung zwei Module bzw. Messmodule auf, die bevorzugt aufeinander abgestimmt sind und zusammen die Auskopplung des auf der zu vermessenden Signalübertragungsleitung übertragenen Hochfrequenzsignals bewerkstelligen. Die vorliegende Erfindung wird primär am Beispiel der Auskopplung eines Hochfrequenzsignals bzw. von Störspannungen auf einer eine erste Teilleitung und eine zweite Teilleitung aufweisenden Datenübertragungsleitung dargestellt, insbesondere unter Zugrundelegung des Beispiels einer Kupferdoppelleitung (Kupferdoppelader) als Datenübertragungsleitung. Jedoch kann die Erfindung auch auf andere Arten der Datenübertragungsleitung übertragen werden, beispielsweise umfassend mehr als zwei Teilleitungen und/oder umfassend andere Leitungsmaterialien.

Die beiden Module bzw. Messmodule bei der erfindungsgemäßen Vorrichtung sind ein Abgreifmodul und ein Stromzangenmodul. Das Abgreifmodul dient dem Abgriff d.h. dem Spannungsabgriff
-- im Fall der Auskopplung des Hochfrequenzsignals (Gegentaktbetrieb) zwischen der ersten Teilleitung und der zweiten Teilleitung der Datenübertragungsleitung und
-- im Fall der Auskopplung der Störspannungen (Gleichtaktbetrieb) zwischen den Teilleitungen der Datenübertragungsleitung einerseits und Masse andererseits. Dieser Abgriff erfolgt an einem ersten Abgreifort entlang der Erstreckung der Datenübertragungsleitung. Das Stromzangenmodul dient der Kopplung an einem zweiten Abgreifort entlang der Erstreckung der Datenübertragungsleitung, und zwar
-- im Fall der Auskopplung des Hochfrequenzsignals durch Kopplung des Stromzangenmoduls an die erste Teilleitung der Datenübertragungsleitung und
-- im Fall der Auskopplung von Störspannungen durch Kopplung des Stromzangenmoduls an die erste und zweite Teilleitung der Datenübertragungsleitung.

Die Vorrichtung dient insbesondere der Durchführung von Messungen der spektralen Leistungsdichte der Datenübertragungsleitung bzw. der Durchführung von Messungen zur Ortung von Störquellen. Hierbei ist insbesondere vorgesehen, dass an einen Ausgang der erfindungsgemäßen Vorrichtung eine weitere Einrichtung zur vollständigen Durchführung einer solchen Messung angeschlossen wird. Als eine solche weitere Einrichtung kommt insbesondere ein sogenannter Spektrum-Analysator in Frage, der erst die eigentliche Messung der spektralen Leistungsdichte vornimmt. Die erfindungsgemäße Vorrichtung stellt jedoch einem solchen Spektrum-Analysator das Messsignal zur Verfügung, d.h. die Messgenauigkeit der durchgeführten Messung ist sensibel von der erfindungsgemäßen Vorrichtung abhängig, die bei einem solchen Messaufbau als Messkopf für den Spektrum-Analysator dient und daher im Folgenden auch als Anlegeleistungsmesskopf bezeichnet wird.

Erfindungsgemäß ist es bevorzugt, dass das Stromzangenmodul einen geteilten Ringkernmagnet aufweist. Hierdurch kann in vorteilhafter Weise eine besonders einfache und genaue Messung des Stromflusses durch die erste Teilleitung der Datenübertragungsleitung vorgenommen werden.

Erfindungsgemäß ist es weiterhin auch bevorzugt, dass im Fall der Auskopplung der Störspannungen eine Kopplung des Stromzangenmoduls (30) an die erste und zweite Teilleitung (51, 52) derart vorgesehen ist, dass das Stromzangenmodul (30) die erste und zweite Teilleitung (51, 52) gleichsinnig umgreift.

Hierdurch ist es erfindungsgemäß vorteilhaft möglich, durch einen einfachen Abgriff bzw. durch eine einfache Kopplung des Stromzangenmoduls an die erste und zweite Teilleitung eine einfache Messung der Störspannungen vorzunehmen.

Erfindungsgemäß ist es ferner bevorzugt, dass das Abgreifmodul als Tastkopf mit einem ersten Abgreifelement und einem zweiten Abgreifelement ausgebildet ist. Hierdurch kann in vorteilhafter Weise die Messung schnell und einfach erfolgen. Besonders bevorzugt ist es ferner, wenn die Vorrichtung derart konfiguriert ist, dass der erste und der zweite Abgreifort von 2 cm bis 200 cm, bevorzugt von 5 cm bis 50 cm, besonders bevorzugt von 8 cm bis 15 cm, ganz besonders bevorzugt 10 cm voneinander entfernt sind. Dieser Abstand zwischen dem ersten Abgreifort und dem zweiten Abgreifort bezieht sich insbesondere auf den Abstand der Abgreiforte entlang der Erstreckung der Datenübertragungsleitung.

Erfindungsgemäß ist ferner auch bevorzugt, dass die Vorrichtung einen Wechselschalter aufweist, wobei der Wechselschalter eine schaltungstechnische Vertauschung der Abgreifelemente des Abgreifmoduls bewirkt. Dies bedeutet, dass bei einer elektrisch leitfähigen Verbindung des ersten Abgreifelements (des Abgreifmoduls) mit der ersten Teilleitung und einer elektrisch leitfähigen Verbindung des zweiten Abgreifelements mit der zweiten Teilleitung (im Fall der Auskopplung des Hochfrequenzsignals, d.h. des Betriebs der Vorrichtung im Gegentaktbetrieb) eine Umschaltung des Wechselschalters eine Anschlusskonfiguration der Vorrichtung an die Teilleitungen der Datenübertragungsleitung derart bewirkt, als ob das erste Abgreifelement eine elektrisch leitfähige Verbindung mit der zweiten Teilleitung und das zweite Abgreifelement eine elektrisch leitfähige Verbindung mit der ersten Teilleitung hätte. Entsprechend ist es bei einer elektrisch leitfähigen Verbindung des ersten Abgreifelements (des Abgreifmoduls) mit der ersten und zweiten Teilleitung und einer elektrisch leitfähigen Verbindung des zweiten Abgreifelements mit Masse (der Datenübertragungsleitung) (im Fall der Auskopplung von Störspannungen, d.h. des Betriebs der Vorrichtung im Gleichtaktbetrieb) eine Umschaltung des Wechselschalters eine Anschlusskonfiguration der Vorrichtung an die Teilleitungen der Datenübertragungsleitung derart bewirkt, als ob das erste Abgreifelement eine elektrisch leitfähige Verbindung mit Masse und das zweite Abgreifelement eine elektrisch leitfähige Verbindung mit der ersten und zweiten Teilleitung hätte. Hierdurch es in beiden Fällen bzw. beiden Betriebsarten erfindungsgemäß zum einen besonders einfach und schnell möglich, eine gute Abstimmung bzw. Anpassung der Vorrichtung an die Impedanzverhältnisse der zu vermessenden Datenübertragungsleitung vorzunehmen und zum anderen ist es hierdurch möglich, bei der Durchführung der Messung den Aufwand dahingehend zu minimieren als keine Änderung des Abgriffs des Abgreifmoduls an der Datenübertragungsleitung bzw. eine Änderung der Kopplung des Stromzangenmoduls aufgrund falscher Polarität vorgenommen werden muss, sondern lediglich der Wechselschalter bedient werden muss. Dies beschleunigt die Durchführung der Messung und verbessert darüberhinaus die Messgenauigkeit, weil mit der gleichen Abgreifkonfiguration (d.h. mit der Möglichkeit einer guten Anpassung an die Impedanzverhältnisse) auch die Messung durchgeführt werden kann, ohne dass eine Vertauschung des Abgriffs an der ersten und zweiten Teilleitung erforderlich wäre.

Erfindungsgemäß ist es ferner ebenfalls bevorzugt vorgesehen, dass die Vorrichtung eine Auskoppeldämpfung von 40 dB +/- 0,1 dB von 30 kHz bis 30 MHz aufweist. Hierdurch ist es erfindungsgemäß bevorzugt möglich, dass ein angeschlossener Spektrum-Analysator nicht übersteuert wird. Aufgrund der erfindungsgemäßen hohen Linearität der erfindungsgemäßen Vorrichtung von +/- 0,1 dB im Frequenzbereich von 30 kHz bis 30 MHz an einer üblichen Kupferdoppeladerimpedanz von beispielsweise Z = 135 Ω +/- 20 Ω (+/-15%) muss bei der Auswertung der Messergebnisse des Spektrum-Analysators lediglich eine Pegelkorrektur von 40 dB durchgeführt werden.

Gemäß einer weiteren bevorzugten Ausführungsform der vorliegenden Erfindung ist es vorgesehen, dass die Vorrichtung einen Ausgang aufweist, wobei der Ausgang an unterschiedliche Eingangsimpedanzen einer an den Ausgang angeschlossenen Einrichtung anpassbar ist. Hierdurch kann in vorteilhafter Weise ein sehr genaues und belastbares Messergebnis der Messung an der Datenübertragungsleitung erhalten werden.

Erfindungsgemäß ist es insbesondere bevorzugt vorgesehen, dass die Vorrichtung zur Messung in Kupferdoppeladernetzen (d.h. Netze umfassend Kupferdoppelleitungen bzw. Kupferdoppeladern als Datenübertragungsleitungen im Sinne der vorliegenden Erfindung) mit einer üblichen mittleren Impedanz von 135 Ω in Verbindung mit handelsüblichen und geeigneten (sowie ausreichend genauen), in der Regel tragbaren und mit einem Akkumulator betriebenen Spektrum-Analysatoren mit symmetrischem Empfängereingang mit einer Eingangs- bzw. Messimpedanz Rₘ von etwa 100 Q bis etwa 150 Ω betrieben wird. Jedoch kann die erfindungsgemäße Vorrichtung auch auf andere als die hier lediglich beispielhaft (am Beispiel der typischen Impedanzverhältnisse des (in Deutschland vorrangig installierten) Telekommunikationsnetzes der Deutschen Telekom) genannten Impedanzverhältnisse bzw. Frequenzbereiche optimiert bzw. angepasst werden, um die gleichen erfindungsgemäßen Vorteile, nämlich eine einfache, schnelle und gleichzeitig vergleichsweise hochgenaue Leitungsmessung zu erzielen.

Ein weiterer Gegenstand der vorliegenden Erfindung bezieht sich auf eine Verwendung einer erfindungsgemäßen Vorrichtung zur Durchführung einer Messung an einer (in der Regel fest installierten) Datenübertragungsleitung.

Hierbei ist besonders bevorzugt, dass die Datenübertragungsleitung während der Durchführung der Messung unterbrechungsfrei für die Datenübertragung verwendbar ist. Dies ist ein wesentlicher Vorteil, der die Durchführung des Verfahrens nicht nur einfacher und schneller gestaltet, sondern gleichzeitig auch genauer, weil an derselben (bzw. unveränderten) Leitungskonfiguration gemessen wird, die auch zur Datenübertragung verwendet wird.

Bevorzugt ist es ferner, dass eine Kupferdoppelleitung, bevorzugt eine verdrillte Kupferdoppelleitung, als Datenübertragungsleitung verwendet wird und/oder dass an die Vorrichtung ein Spektrum-Analysator zur Messung der spektralen Leistungsdichte des auf der Datenübertragungsleitung übertragenen Hochfrequenzsignals bzw. zur Messung von Störspannungen angeschlossen wird und/oder dass die Vorrichtung an verschiedene Eingangsimpedanzen des Spektrum-Analysators angepasst wird.

Ein weiterer Gegenstand der vorliegenden Erfindung betrifft ein Verfahren zur Durchführung einer Messung an einer zur Übertragung eines Hochfrequenzsignals vorgesehenen und eine erste Teilleitung sowie eine zweite Teilleitung aufweisenden Datenübertragungsleitung, wobei eine Vorrichtung zur Auskopplung des Hochfrequenzsignals ein Abgreifmodul und ein Stromzangenmodul aufweist, wobei zur Auskopplung des Hochfrequenzsignals das Abgreifmodul an die erste und zweite Teilleitung an einem ersten Abgreifort der Datenübertragungsleitung angeschlossen wird und wobei zur Auskopplung des Hochfrequenzsignals das Stromzangenmodul an die erste Teilleitung an einem zweiten Abgreifort der Datenübertragungsleitung gekoppelt wird. Ein weiterer Gegenstand der vorliegenden Erfindung betrifft ein Verfahren zur Durchführung einer Messung an einer zur Übertragung eines Hochfrequenzsignals vorgesehenen und eine erste Teilleitung (51) sowie eine zweite Teilleitung (52) aufweisenden Datenübertragungsleitung (50), wobei eine Vorrichtung (10) zur Auskopplung des Hochfrequenzsignals ein Abgreifmodul (20) und ein Stromzangenmodul (30) aufweist, wobei zur Auskopplung des Hochfrequenzsignals das Abgreifmodul (20) an die erste und zweite Teilleitung (51, 52) an einem ersten Abgreifort (61) der Datenübertragungsleitung (50) angeschlossen wird und wobei
-- im Fall der Auskopplung des Hochfrequenzsignals das Stromzangenmodul (30) an die erste Teilleitung (51) an einem zweiten Abgreifort (62) der Datenübertragungsleitung (50) und
-- im Fall der Auskopplung der Störspannungen das Stromzangenmodul (30) an die erste und zweite Teilleitung (51, 52) an einem zweiten Abgreifort (62) der Datenübertragungsleitung (50)
gekoppelt wird.

Hierbei ist besonders bevorzugt, dass an die Vorrichtung ein Spektrum-Analysator zur Messung der spektralen Leistungsdichte des auf der Datenübertragungsleitung übertragenen Hochfrequenzsignals bzw. der Störspannungen angeschlossen wird, wobei ein Ausgang der Vorrichtung an unterschiedliche Eingangsimpedanzen des Spektrum-Analysators angepasst wird.

Ausführungsbeispiele der Erfindung sind in der Zeichnung dargestellt und in der nachfolgenden Beschreibung näher erläutert. Die Figuren schränken den allgemeinen Erfindungsgedanken nicht ein.
Figur 1 zeigt eine schematische Darstellung im Sinne eines Blockschaltbildes einer erfindungsgemäßen Vorrichtung, die zur Auskopplung eines auf einer Datenübertragungsleitung übertragenen Hochfrequenzsignals mit der Datenübertragungsleitung an einem ersten Abgreifort und einem zweiten Abgreifort verbunden ist.
Figur 2 zeigt eine schematische Darstellung der erfindungsgemäßen Vorrichtung zur Auskopplung des Hochfrequenzsignals mit gegenüber der Figur 1 größerer Detaillierung.
Figur 3 zeigt schematisch ein Ersatzschaltbild der erfindungsgemäßen Vorrichtung bei Benutzung gemäß Figur 2.
Figur 4 zeigt eine schematische Darstellung der erfindungsgemäßen Vorrichtung zur Auskopplung der Störspannungen mit gegenüber der Figur 1 größerer Detaillierung.
Figur 5 zeigt schematisch ein Ersatzschaltbild der erfindungsgemäßen Vorrichtung bei Benutzung gemäß Figur 4.

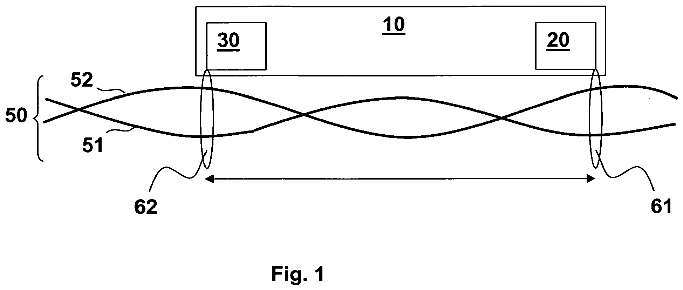

In Figur 1 ist schematisch im Sinne eines Blockschaltbildes eine erfindungsgemäße Vorrichtung 10 zur Auskopplung eines auf einer Datenübertragungsleitung 50 übertragenen Hochfrequenzsignals dargestellt. Der dargestellte Teil der Datenübertragungsleitung 50 stellt selbstverständlich in der Regel lediglich einen (geringen) Teil der Erstreckung der Datenübertragungsleitung 50 dar. Die Vorrichtung 10 weist ein Abgreifmodul 20 und ein Stromzangenmodul 30 auf. Das Abgreifmodul 20 ist an einem ersten Abgreifort 61 mit der Datenübertragungsleitung 50 verbunden. Das Stromzangenmodul 30 ist an einem zweiten Abgreifort 62 mit der Datenübertragungsleitung 50 verbunden. Die Datenübertragungsleitung 50 weist eine erste Teilleitung 51 und eine zweite Teilleitung 52 auf, die bevorzugt als verdrillte Teilleitungen 51, 52 einer Kupferdoppelleitung (bzw. Kupferdoppelader) vorgesehen sind. Zwischen dem ersten Abgreifort 61 und dem zweiten Abgreifort 62 ist ein Abstand entlang der Erstreckung der Datenübertragungsleitung 50 vorgesehen, der in der Figur 1 mit einem Doppelpfeil veranschaulicht ist. Der Abstand zwischen dem ersten Abgreifort 61 und dem zweiten Abgreifort 62 beträgt erfindungsgemäß bevorzugt von etwa 2 cm bis etwa 200 cm, besonders bevorzugt von etwa 5 cm bis etwa 50 cm, ganz besonders bevorzugt von etwa 8 cm bis etwa 15 cm und noch stärker bevorzugt etwa 10 cm.

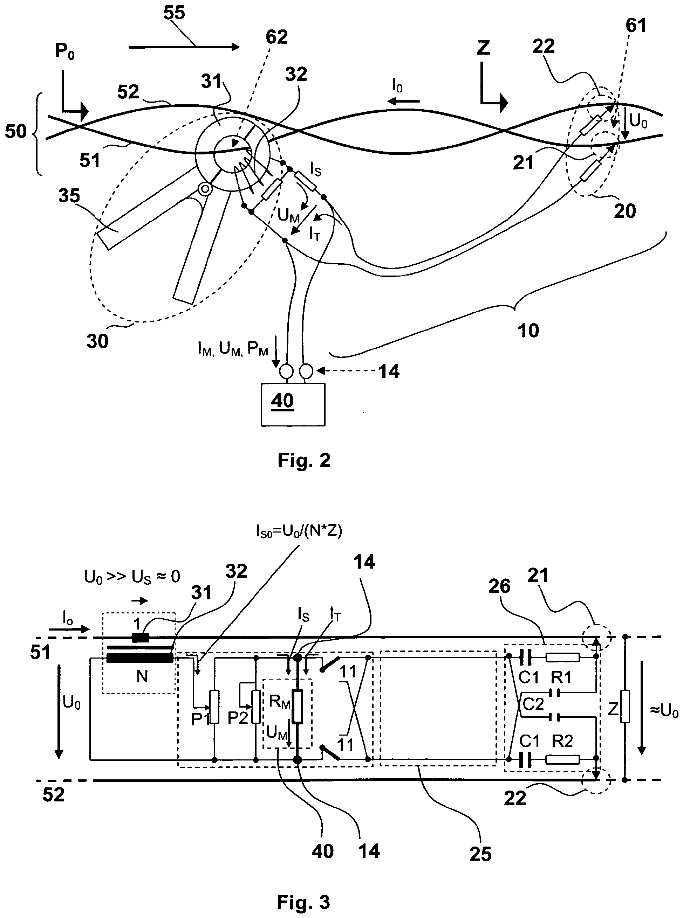

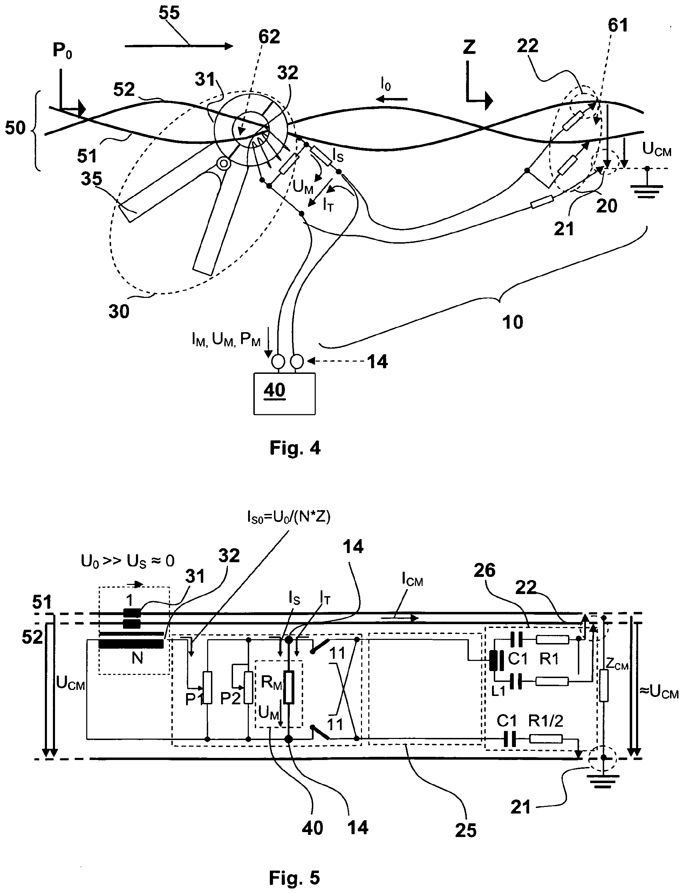

In Figur 2 ist der Betrieb der erfindungsgemäßen Vorrichtung 10 zur Auskopplung des Hochfrequenzsignals (d.h. der Gegentaktbetrieb) dargestellt, während in Figur 4 der Betrieb der erfindungsgemäßen Vorrichtung 10 zur Auskopplung von Störsignalen bzw. Störspannungen (d.h. der Gleichtaktbetrieb) dargestellt ist.

In Figur 2 ist eine schematische Darstellung der erfindungsgemäßen Vorrichtung 10 zur Auskopplung des Hochfrequenzsignals mit gegenüber der Figur 1 größerer Detaillierung abgebildet. Wiederum ist die Vorrichtung 10 mit ihrem Abgreifmodul 20 und ihrem Stromzangenmodul 30 dargestellt. Wiederum entspricht der dargestellte Teil der Datenübertragungsleitung 50 lediglich einem (geringen) Teil der Erstreckung der Datenübertragungsleitung 50. Das Abgreifmodul 20 weist bevorzugt ein ersten Abgreifelement 21 und ein zweites Abgreifelement 22 auf. Mittels der Abgreifelemente 21, 22 ist es möglich, eine elektrisch leitfähige Verbindung (im Sinne von Messelektroden) mit den Teilleitungen 51, 52 am ersten Abgreifort 61 zu realisieren. Das Stromzangenmodul 30 weist bevorzugt einen Ringkernmagnet 31 auf, mittels dem (über die Messung des magnetischen Flusses) der Stromfluss durch eine der Teilleitungen 51, 52 der Datenübertagungsleitung 50 gemessen werden kann. Am zweiten Abgreifort 62 umgibt der Ringkernmagnet 31 des Stromzangenmoduls 30 eine der Teilleitungen 51, 52.

Im dargestellten Anschlussbeispiel ist das Stromzangenmodul 30 an die erste Teilleitung 51 bzw. mit der ersten Teilleitung 51 gekoppelt (am zweiten Abgreifort 62) und es ist das erste Abgreifelement 21 an die erste Teilleitung 51 sowie das zweite Abgreifelement 22 an die zweite Teilleitung 52 angeschlossen (am ersten Abgreifort 61). Die erfindungsgemäße Vorrichtung 10 weist einen Ausgang 14 auf, an den bevorzugt ein Spektrum-Analysator 40 angeschlossen werden kann, insbesondere wenn die spektrale Leistungsdichte des auf der Datenübertragungsleitung 50 übertragenen Hochfrequenzsignals gemessen werden soll.

Ein genaue Bestimmung der spektralen Leistungsdichte ist insbesondere dann erforderlich, wenn eine Mehrzahl von potentiell miteinander wechselwirkenden Datenübertragungsleitungen (etwa durch Übersprechen) von unterschiedlichen Anbietern genutzt werden und rechtlich zweifelsfrei sichergestellt werden muss, dass die Signaleinkopplung (insbesondere in eine oder mehrere von solchen Datenübertragungsleitungen durch einen der Anbieter) mit den (gesetzlichen oder regulatorischen) technischen Vorgaben in Übereinstimmung ist. Hierfür ist eine hohe Genauigkeit bei der Bestimmung insbesondere der spektralen Leistungsdichte erforderlich.
In Figur 2 breitet sich das Hochfrequenzsignal gemäß der Ausbreitungsrichtung 55 aus (d.h. in der Abbildung von links nach rechts). Die erste Teilleitung 51 entspricht hierbei der a-Ader der Datenübertragungsleitung 50. Die zweite Teilleitung 52 entspricht der b-Ader der Datenübertragungsleitung 50. Es ist beispielsweise die (von einer nicht dargestellten Signalbereitstellungseinrichtung) in die Datenübertragungsleitung 50 eingekoppelte Leistung P₀ (bzw. spektrale Leistungsdichte) zu messen. Mittels des Stromzangenmoduls 30 wird der Strom I₀ gemessen, der in der ersten Teilleitung 51 fließt. Hierzu weist das Stromzangenmodul 30 bevorzugt eine Sekundärwindung 32 um den Querschnitt des Ringkernmagneten 31 auf, mittels welcher der Strom I_{S} (Stromzangenmodulstrom) generiert wird bzw. in welcher der Strom I_{S} induziert wird. Mittels des Abgreifmoduls 20 wird die Spannung U₀ zwischen den Teilleitungen 51, 52 abgegriffen, die einen Strom I_{T} (Abgreifmodulstrom) in der Vorrichtung 10 verursacht. Infolge der Richtkopplerfunktion der erfindungsgemäßen Vorrichtung 10 wird das von links kommende Hochfrequenzsignal (Sendesignal) an den Ausgang 14 der Vorrichtung 10 gekoppelt, wobei sich I_{S} und I_{T} gegenseitig verstärken (konstruktive Interferenz). Ein von rechts kommendes Hochfrequenzsignal wird weitgehend unterdrückt (destruktive Interferenz von I_{S} und I_{T}). Werden die Abgreifelemente 21, 22 vertauscht ist dies Situation umgekehrt.

Die Datenübertragungsleitung 50 weist eine Impedanz von Z auf. Am Ausgang 14 der Vorrichtung 10 liegt die Messspannung U_{M}, der Messstrom I_{M} und die Leistung P_{M} zur weiteren Verarbeitung durch den Spektrum-Analysator 40 an. Hierbei entspricht der Messstrom I_{M} der (komplexen Addition) von I_{S} und I_{T}. Erfindungsgemäß ist es bevorzugt, dass die Vorrichtung 10 einen Wechselschalter 11 aufweist (vgl. Figur 3), wobei der Wechselschalter 11 eine schaltungstechnische Vertauschung der Abgreifelemente 21, 22 des Abgreifmoduls 20 bewirkt. Dies bedeutet, dass bei Anschluss des ersten Abgreifelements 21 mit der ersten Teilleitung 51 und bei Anschluss des zweiten Abgreifelements 22 mit der zweiten Teilleitung 52 eine Umschaltung des Wechselschalters 11 eine Anschlusskonfiguration der Vorrichtung 10 an die Teilleitungen 51, 52 der Datenübertragungsleitung 50 derart bewirkt, als ob das erste Abgreifelement 21 an die zweite Teilleitung 52 und das zweite Abgreifelement 22 an die erste Teilleitung 51 angeschlossen wäre. Es kann hierdurch das Vorzeichen von U₀ und damit von I_{T} umgeschaltet werden. Bei einer optimalen Anpassung zwischen dem Abgreifmodul 20 und dem Stromzangenmodul 30 heben sich (bei entsprechender Einstellung des Wechselschalters 11) I_{T} und I_{S} gerade auf (d.h. sie interferieren destruktiv). Bei genauer Abstimmung des Abgreifmoduls 20 mit dem Stromzangenmodul 30 ergibt die Vorrichtung 10 die Funktion eines Richtkopplers.
Im Messbetrieb (d.h. nach einer Umschaltung des Wechselschalters 11) ergibt sich konstruktive Interferenz, d.h. eine Überlagerung und I_{M} entspricht der Summe von I_{S} und I_{T}.

In Figur 3 ist schematisch ein Ersatzschaltbild der erfindungsgemäßen Vorrichtung 10 bei der Benutzung gemäß Figur 2 dargestellt. Eine nicht eigens dargestellte bzw. benannte Leiterplatte bzw. Platine, die beispielsweise in das Stromzangenmodul 30 (beispielsweise in einen gleichzeitig zum Öffnen und Schließen des Ringmagneten 31 benutzten Handgriff des Stromzangenmoduls untergebracht) integriert ist, weist verschiedene Schaltungselemente auf, die nachfolgend näher erläutert sind. Die Sekundärwindung 32 bzw. Sekundärwicklung 32 weist beispielsweise N = 15 Windungen auf, so dass sich I_{S0} ergibt zu I_{S0} = U₀/(N x Z), d.h. U_{T} entspricht U₀ dividiert durch das Produkt aus der Windungsanzahl der Sekundärwindung 32 (bzw. dem Windungsverhältnis aus Primär- und Sekundärwindung 31, 32) und der Impedanz Z. Ein Potentiometer P1 (beispielsweise 500 Ω) dient zum exakten Abgleich des Stromzangenmodulstroms I_{S} mit dem Abgreifmodulstrom I_{T} (der auch als Tastkopfstrom bezeichnet wird). Bei Umkehr der Signalrichtung (bzw. Ausbreitungsrichtung des Hochfrequenzsignals in der Datenübertragungsleitung 50) bzw. bei einer Umschaltung des Wechselschalters 11 ergibt sich destruktive Interferenz von Stromzangenmodulstrom I_{S} und Abgreifmodulstrom I_{T}. Ein weiteres Potentiometer P2 (beispielsweise 5 kΩ) dient zum Abgleich der Messspannung U_{M}, insbesondere auf 40 dB Auskoppeldämpfung. Die Messspannung U_{M} fällt über dem Eingangswiderstand R_{M} (beispielsweise 135 Ω) des Spektrum-Analysators 40 ab. Der Wechselschalter 11 ist in der Figur 3 dargestellt und dient der Vertauschung der Polarität des Tastkopfstroms I_{T} (bzw. des Abgreifmodulstroms). Ein Abgreifmodulkabel 25 (auch Tastkopfkabel genannt) ist beispielsweise 40 cm lang und weist eine sehr hohe Wellenimpedanz auf, damit der Stromzangenmodulstrom I_{S} vornehmlich über den Eingangswiderstand R_{M} des Spektrum-Analysators 40 fließt. Bevorzugt umfasst das Abgreifmodul 20 das Abgreifmodulkabel 25 sowie eine Abgreifmoduleinheit 26, welche die Bauteile R1, C1 und C2 sowie Prüfspitzen aufweist. Die Abgreifmoduleinheit 26 ist bevorzugt mit dem Abgreifmodulkabel 25 fest verbunden. Hierbei dient die Kapazität C1 zur Gleichstromentkopplung des Abgreifmodulstroms I_{T}. Der Tastkopfwiderstand R1 (beispielsweise jeweils (d.h. zweimal) 9300 Ω) dient zur hochohmigen Anschaltung an U0 über dem Leistungswiderstand Z (der Datenübertragungsleitung 50), welcher im Mittel beispielsweise bei 135 Ω liegt. Eine variable Kapazität C2 (beispielsweise 0 bis 2 pF) bewirkt mittels isolierter und auf einer Länge von ca. 1 bis 4 cm verdrillter Drähte eine gegebenenfalls erforderliche Phasendrehung zum zusätzlichen Abgleich der Phasen der beiden Ströme I_{S} und I_{T} (so dass bei einem guten Abgleich die Differenz von I_{S} und I_{T} ungefähr verschwindet, d.h. etwa gleich 0 ist). C2 wird erfindungsgemäß beispielsweise auf die Länge des Abgreifmodulkabels 25 (beispielsweise 40 cm) und den Abstand zwischen dem ersten und dem zweiten Abgreifort 61, 62 (beispielsweise 10 cm) abgestimmt. C2 kann in der Regel nicht mithilfe eines Trimmkondensators auf den erforderlichen Betrag eingestellt werden, weil oftmals dessen Mindestbetrag zu hoch ist (beispielsweise 1,5 bis 5,5 pF).

Erfindungsgemäß ist es vorteilhaft möglich, dass eine Übersteuerung und das Auftreten von Intermodulationsverzerrungen in einem Spektrum-Analysator 40 durch die erfindungsgemäße Vorrichtung 10, insbesondere durch die vergleichsweise hohe Auskoppeldämpfung, vermieden wird. Auch dies dient der Erhöhung der Genauigkeit bei der Durchführung von Messungen des angeschlossenen Spektrum-Analysators 40.

Der Ringkernmagnet 31 ist erfindungsgemäß insbesondere ein aufklappbarer Ringkernmagnet, der mittels einer Betätigung einer Zangenvorrichtung 35 (vgl. Figur 2) des Stromzangenmoduls 30 geöffnet werden kann.

In Figur 4 ist eine schematische Darstellung der erfindungsgemäßen Vorrichtung 10 zur Auskopplung der Störspannungen abgebildet. Wiederum ist die Vorrichtung 10 mit ihrem Abgreifmodul 20 und ihrem Stromzangenmodul 30 dargestellt. Wiederum entspricht der dargestellte Teil der Datenübertragungsleitung 50 lediglich einem (geringen) Teil der Erstreckung der Datenübertragungsleitung 50. Das Abgreifmodul 20 weist bevorzugt das erste Abgreifelement 21 und das zweite Abgreifelement 22 auf. Mittels der Abgreifelemente 21, 22 ist es möglich, eine elektrisch leitfähige Verbindung (im Sinne von Messelektroden) mit einerseits den Teilleitungen 51, 52 und andererseits der Masse der Datenübertragungsleitung 50 am ersten Abgreifort 61 zu realisieren. Das Stromzangenmodul 30 weist bevorzugt einen Ringkernmagnet 31 auf, mittels dem (über die Messung des magnetischen Flusses) der Stromfluss durch beide Teilleitungen 51, 52 der Datenübertagungsleitung 50 gemessen werden kann, wobei die beiden Teilleitungen 51, 52 gleichsinnig vom Ringkernmagnet 31 am zweiten Abgreifort 62 umschlossen werden.

Im dargestellten Anschlussbeispiel ist das erste Abgreifelement 21 an die Masse der Datenübertragungsleitung 50 und das zweite Abgreifelement 22 an die erste und zweite Teilleitung 51, 52 angeschlossen (am ersten Abgreifort 61). Die erfindungsgemäße Vorrichtung 10 weist einen Ausgang 14 auf, an den bevorzugt ein Spektrum-Analysator 40 angeschlossen werden kann, insbesondere wenn das Störsignal auf der Datenübertragungsleitung 50 gemessen werden soll.

In Figur 4 breitet sich das Störsignal bzw. die Störspannung gemäß der Ausbreitungsrichtung 55 aus (d.h. in der Abbildung von links nach rechts). Die erste Teilleitung 51 entspricht hierbei der a-Ader der Datenübertragungsleitung 50. Die zweite Teilleitung 52 entspricht der b-Ader der Datenübertragungsleitung 50. Mittels des Stromzangenmoduls 30 wird der Strom I_{CM} gemessen, der aus den Stromflüssen in der ersten und zweiten Teilleitung 51, 52 resultiert. Hierzu weist das Stromzangenmodul 30 bevorzugt eine Sekundärwindung 32 um den Querschnitt des Ringkernmagneten 31 auf, mittels welcher der Strom I_{S} (Stromzangenmodulstrom) generiert wird bzw. in welcher der Strom I_{S} induziert wird. Mittels des Abgreifmoduls 20 wird die Spannung U_{CM} zwischen einerseits den beiden Teilleitungen 51, 52 und andererseits der Masse der Datenübertragungsleitung 50 abgegriffen, die einen Strom I_{T} (Abgreifmodulstrom) in der Vorrichtung 10 verursacht. Infolge der Richtkopplerfunktion der erfindungsgemäßen Vorrichtung 10 wird das von links kommende Störspannungssignal an den Ausgang 14 der Vorrichtung 10 gekoppelt, wobei sich I_{S} und I_{T} gegenseitig verstärken (konstruktive Interferenz). Ein von rechts kommendes Hochfrequenzsignal wird weitgehend unterdrückt (destruktive Interferenz von I_{S} und I_{T}). Werden die Abgreifelemente 21, 22 vertauscht ist diese Situation umgekehrt.

Die Datenübertragungsleitung 50 weist eine Impedanz von Z auf. Am Ausgang 14 der Vorrichtung 10 liegt die Messspannung U_{M}, der Messstrom I_{M} und die Leistung P_{M} zur weiteren Verarbeitung durch den Spektrum-Analysator 40 an. Hierbei entspricht der Messstrom I_{M} der (komplexen Addition) von I_{S} und I_{T}. Erfindungsgemäß ist es bevorzugt, dass die Vorrichtung 10 einen Wechselschalter 11 aufweist (vgl. Figur 5), wobei der Wechselschalter 11 eine schaltungstechnische Vertauschung der Abgreifelemente 21, 22 des Abgreifmoduls 20 bewirkt. Dies bedeutet, dass bei Anschluss des ersten Abgreifelements 21 an die Masse der Datenübertragungsleitung 50 und bei Anschluss des zweiten Abgreifelements 22 mit der ersten und zweiten Teilleitung 51, 52 eine Umschaltung des Wechselschalters 11 eine Anschlusskonfiguration der Vorrichtung 10 an die Teilleitungen 51, 52 der Datenübertragungsleitung 50 derart bewirkt, als ob das erste Abgreifelement 21 an die erste und zweite Teilleitung 51, 52 und das zweite Abgreifelement 22 an die Masse der Datenübertragungsleitung 50 angeschlossen wäre. Es kann hierdurch das Vorzeichen von U_{CM} und damit von I_{T} umgeschaltet werden. Bei einer optimalen Anpassung zwischen dem Abgreifmodul 20 und dem Stromzangenmodul 30 heben sich (bei entsprechender Einstellung des Wechselschalters 11) I_{T} und I_{S} gerade auf (d.h. sie interferieren destruktiv). Bei genauer Abstimmung des Abgreifmoduls 20 mit dem Stromzangenmodul 30 ergibt die Vorrichtung 10 die Funktion eines Richtkopplers.
Im Messbetrieb (d.h. nach einer Umschaltung des Wechselschalters 11) ergibt sich konstruktive Interferenz, d.h. eine Überlagerung und IM entspricht der Summe von I_{S} und I_{T}.

In Figur 5 ist schematisch ein Ersatzschaltbild der erfindungsgemäßen Vorrichtung 10 bei der Benutzung gemäß Figur 4 dargestellt. Eine nicht eigens dargestellte bzw. benannte Leiterplatte bzw. Platine, die beispielsweise in das Stromzangenmodul 30 (beispielsweise in einen gleichzeitig zum Öffnen und Schließen des Ringmagneten 31 benutzten Handgriff des Stromzangenmoduls untergebracht) integriert ist, weist verschiedene Schaltungselemente auf, die den Schaltungselementen gemäß der Figurenbeschreibung von Figur 3 entsprechen. Nachfolgend sind lediglich die Unterschiede näher erläutert.

Bevorzugt umfasst das Abgreifmodul 20 das Abgreifmodulkabel 25 sowie eine Abgreifmoduleinheit 26, welche die Bauteile R1, R1/2, C1 und L1 sowie Prüfspitzen aufweist. Die Abgreifmoduleinheit 26 ist bevorzugt mit dem Abgreifmodulkabel 25 fest verbunden. Hierbei dient die Kapazität C1 zur Gleichstromentkopplung des Abgreifmodulstroms I_{T}. Der Tastkopfwiderstand R1 (beispielsweise jeweils (d.h. zweimal) 9300 Ω) dient zur hochohmigen Anschaltung an U_{CM} über dem Leitungswellenwiderstand Z_{CM} (der Datenübertragungsleitung 50), welcher im Mittel beispielsweise bei 55 bis 60 Ω liegt. Eine Induktivität L1 ist für den Gleichtaktstrom I_{CM} bifilar, unterdrückt aber den Fluss des grundsätzlich vorhandenen Differenzstroms zwischen der ersten Teilleitung 51 und der zweiten Teilleitung 52. L1 ist zusätzlich in Reihe zu den beiden Widerständen R1 geschaltet. Der Widerstand R1/2 entspricht beispielsweise einem Wert von 4650 Ω.

Der Ringkernmagnet 31 ist erfindungsgemäß insbesondere ein aufklappbarer Ringkernmagnet, der mittels einer Betätigung einer Zangenvorrichtung 35 (vgl. Figur 2) des Stromzangenmoduls 30 geöffnet werden kann.

## Patentansprüche

1. Vorrichtung (10) zur Auskopplung
-- eines auf einer Datenübertragungsleitung (50) übertragenen Hochfrequenzsignals, wobei die Datenübertragungsleitung (50) eine erste Teilleitung (51) und eine zweite Teilleitung (52) aufweist, oder
-- von Störspannungen,
**dadurch gekennzeichnet, dass** die Vorrichtung (10) aufweist:
-- ein Abgreifmodul (20), wobei zur Auskopplung des Hochfrequenzsignals oder der Störspannungen eine Kopplung des Abgreifmoduls (20) an die erste und zweite Teilleitung (51, 52) an einem ersten Abgreifort (61) der Datenübertragungsleitung (50) vorgesehen ist; und
-- ein Stromzangenmodul (30)" wobei
-- im Fall der Auskopplung des Hochfrequenzsignals eine Kopplung des Stromzangenmoduls (30) an die erste Teilleitung (51) an einem zweiten Abgreifort (62) der Datenübertragungsleitung (50) und
-- im Fall der Auskopplung der Störspannungen eine Kopplung des Stromzangenmoduls (30) an die erste und zweite Teilleitung (51, 52) an einem zweiten Abgreifort (62) der Datenübertragungsleitung (50) vorgesehen ist; wobei dass die Vorrichtung (10) einen Ausgang (14) aufweist, wobei der Ausgang an unterschiedliche Eingangsimpedanzen einer an den Ausgang (14) angeschlossenen Einrichtung anpassbar ist

2. Vorrichtung (10) nach Anspruch 1, **dadurch gekennzeichnet, dass** das Stromzangenmodul (30) einen geteilten Ringkernmagnet aufweist.

3. Vorrichtung (10) nach Anspruch 1 oder 2, **dadurch gekennzeichnet, dass** im Fall der Auskopplung der Störspannungen eine Kopplung des Stromzangenmoduls (30) an die erste und zweite Teilleitung (51, 52) derart vorgesehen ist, dass das Stromzangenmodul (30) die erste und zweite Teilleitung (51, 52) gleichsinnig umgreift.

4. Vorrichtung (10) nach einem der vorhergehenden Ansprüchen, **dadurch gekennzeichnet, dass** das Abgreifmodul (20) als Tastkopf mit einem ersten Abgreifelement (21) und einem zweiten Abgreifelement (22) ausgebildet ist.

5. Vorrichtung (10) nach einem der vorhergehenden Ansprüchen, **dadurch gekennzeichnet, dass** die Vorrichtung (10) derart konfiguriert ist, dass der erste und der zweite Abgreifort (61, 62) von 2 cm bis 200 cm, bevorzugt von 5 cm bis 50 cm, besonders bevorzugt von 8 cm bis 15 cm, ganz besonders bevorzugt 10 cm voneinander entfernt sind.

6. Vorrichtung (10) nach einem der vorhergehenden Ansprüchen, **dadurch gekennzeichnet, dass** die Vorrichtung (10) einen Wechselschalter (11) aufweist, wobei der Wechselschalter (11) eine schaltungstechnische Vertauschung der Abgreifelemente (21, 22) des Abgreifmoduls (20) bewirkt.

7. Vorrichtung (10) nach einem der vorhergehenden Ansprüchen, **dadurch gekennzeichnet, dass** die Vorrichtung (10) eine Auskoppeldämpfung von 40 dB +/- 0,1 dB von 30 kHz bis 30 MHz aufweist.

8. Verwendung einer Vorrichtung (10) nach einem der vorhergehenden Ansprüche zur Durchführung einer Messung an der Datenübertragungsleitung (50).

9. Verwendung nach Anspruch 8, **dadurch gekennzeichnet, dass** die Datenübertragungsleitung (50) während der Durchführung der Messung unterbrechungsfrei für die Datenübertragung verwendbar ist.

10. Verwendung nach Anspruch 8 oder 9, **dadurch gekennzeichnet, dass** eine Kupferdoppelleitung, bevorzugt eine verdrillte Kupferdoppelleitung, als Datenübertragungsleitung (50) verwendet wird.

11. Verwendung nach einem der Ansprüche 8 bis 10, **dadurch gekennzeichnet, dass** an die Vorrichtung (10) ein Spektrum-Analysator (40) zur Messung der spektralen Leistungsdichte des auf der Datenübertragungsleitung (50) übertragenen Hochfrequenzsignals angeschlossen wird.

12. Verwendung nach Anspruch 11, **dadurch gekennzeichnet, dass** die Vorrichtung (10) an verschiedene Eingangsimpedanzen des Spektrum-Analysators (40) angepasst wird.

13. Verfahren zur Auskopplung
-- eines auf einer Datenübertragungsleitung (50) übertragenen Hochfrequenzsignals, wobei die Datenübertragungsleitung (50) eine erste Teilleitung (51) und eine zweite Teilleitung (52) aufweist, oder
-- von Störspannungen,
durch eine Vorrichtung (10), welche ein Abgreifmodul (20), ein Stromzangenmodul (30) und einen Ausgang (14) aufweist, wobei das Verfahren die Schritte aufweist:
-- ein Anschliessen des Abgreifmoduls (20) an die erste und zweite Teilleitung (51, 52) an einem ersten Abgreifort (61) der Datenübertragungsleitung (50) zur Auskopplung des Hochfrequenzsignals oder der Störspannungen; i
-- ein Ankoppeln des Stromzangenmoduls (30) an die erste Teilleitung (51) an einem zweiten Abgreifort (62) der Datenübertragungsleitung (50) zur Auskopplung des Hochfrequenzsignals; und
-- ein Ankoppeln des Stromzangenmoduls (30) an die erste und zweite Teilleitung (51, 52) an einem zweiten Abgreifort (62) der Datenübertragungsleitung (50) zur Auskopplung der Störspannungen; , ,
-- ein Anpassen des Ausgangs (14) an unterschiedliche Eingangsimpedanzen einer an den Ausgang (14) angeschlossenen Einrichtung; .

## Claims

1. Apparatus for decoupling
- a radio-frequency signal transmitted on a data transmission line (50), wherein the data transmission line (50) has a first sub-line (51) and a second sub-line (52), or for decoupling
- interference voltages,
**characterised in that** the apparatus (10) comprises:
- a tapping module (20), wherein in order to decouple the radio-frequency signal or the interference voltages, the tapping module (20) is coupled to the first and second sub-lines (51, 52) at a first tapping location (61) of the data transmission line (50); and
- a current probe module (30), wherein
- in the event of decoupling of the radio-frequency signal, the current probe module (30) is coupled to the first sub-line (51) at a second tapping location (62) of the data transmission line (50), and
- in the event of decoupling of the interference voltages, the current probe module (30) is coupled to the first and second sub-lines (51, 52) at a second tapping location (62) of the data transmission line (50) ;
wherein the apparatus (10) comprises an output (14), wherein the output can be adapted to different input impedances of a device connected to the output (14).

2. Apparatus (10) as claimed in claim 1, **characterised in that** the current probe module (30) comprises a split toroidal core magnet.

3. Apparatus (10) as claimed in claim 1 or 2, **characterised in that** in the event of decoupling of the interference voltages, the current probe module (30) is coupled to the first and second sub-lines (51, 52) such that the current probe module (30) encompasses the first and second sub-lines (51, 52) in the same direction.

4. Apparatus (10) as claimed in any one of the preceding claims, **characterised in that** the tapping module (20) is designed as a sensing head having a first tapping element (21) and a second tapping element (22).

5. Apparatus (10) as claimed in any one of the preceding claims, **characterised in that** the apparatus (10) is configured such that the first and second tapping locations (61, 62) are spaced apart from one another at a distance of 2 cm to 200 cm, preferably 5 cm to 50 cm, in a particularly preferred manner 8 cm to 15 cm, in a most particularly preferred manner 10 cm.

6. Apparatus (10) as claimed in any one of the preceding claims, **characterised in that** the apparatus (10) comprises a changeover switch (11), wherein the changeover switch (11) effects a circuitry interchange of the tapping elements (21, 22) of the tapping module (20).

7. Apparatus (10) as claimed in any one of the preceding claims, **characterised in that** the apparatus (10) has a decoupling attenuation of 40 dB +/- 0.1 dB from 30 kHz to 30 MHz.

8. Use of an apparatus (10) as claimed in any one of the preceding claims for carrying out a measurement on a data transmission line (50).

9. Use as claimed in claim 8, **characterised in that** the data transmission line (50) can be used without interruption for the data transmission whilst the measurement is being carried out.

10. Use as claimed in claim 8 or 9, **characterised in that** a two-wire copper line, preferably a twisted two-wire copper line, is used as the data transmission line (50).

11. Use as claimed in any one of claims 8 to 10, **characterised in that** a spectrum analyser (40) for measuring the spectral power density of the radio-frequency signal transmitted on the data transmission line (50) is connected to the apparatus (10).

12. Use as claimed in claim 11, **characterised in that** the apparatus (10) is adapted to different input impedances of the spectrum analyser (40).

13. Method for decoupling
- a radio-frequency signal transmitted on a data transmission line (50), wherein the data transmission line (50) has a first sub-line (51) and a second sub-line (52), or for decoupling
- interference voltages,
by means of an apparatus (10) which comprises a tapping module (20), a current probe module (30) and an output (14), wherein the method comprises the steps of:
- connecting the tapping module (20) to the first and second sub-lines (51, 52) at a first tapping location (61) of the data transmission line (50) for decoupling the radio-frequency signal or the interference voltages;
- coupling the current probe module (30) to the first sub-line (51) at a second tapping location (62) of the data transmission line (50) for decoupling the radio-frequency signal; and
- coupling the current probe module (30) to the first and second sub-lines (51, 52) at a second tapping location (62) of the data transmission line (50) for decoupling the interference voltages;
- adapting the output (14) to different input impedances of a device connected to the output (14).

## Revendications

1. Dispositif (10) destiné à découpler :
- un signal à haute fréquence transmis sur une ligne de transmission de données (50), dans lequel la ligne de transmission de données (50) présente une première ligne partielle (51) et une deuxième ligne partielle (52), ou
- des tensions parasites,
**caractérisé en ce que** le dispositif (10) présente :
- un module de prélèvement (20), dans lequel, pour découpler le signal à haute fréquence ou les tensions parasites, un couplage du module de prélèvement (20) à la première et à la deuxième lignes partielles (51, 52) est ménagé au niveau d'un premier endroit de prélèvement (61) de la ligne de transmission de données (50) ; et
- un module de pince ampérimétrique (30), dans lequel
- en cas du découplage du signal à haute fréquence, un couplage du module de pince ampérimétrique (30) à la première ligne partielle (51) est prévu au niveau d'un deuxième endroit de prélèvement (62) de la ligne de transmission de données (50), et
- en cas du découplage des tensions parasites, un couplage du module de pince ampérimétrique (30) à la première et à la deuxième lignes partielles (51, 52) est prévu au niveau d'un deuxième endroit de prélèvement (62) de la ligne de transmission de données (50) ;
dans lequel le dispositif (10) présente une sortie (14), dans lequel la sortie est adaptable à différentes impédances d'entrée d'un dispositif raccordé à la sortie (14).

2. Dispositif (10) selon la revendication 1, **caractérisé en ce que** le module de pince ampérimétrique (30) présente un aimant à noyau annulaire divisé.

3. Dispositif (10) selon la revendication 1 ou 2, **caractérisé en ce qu'**en cas du découplage des tensions parasites, un couplage du module de pince ampérimétrique (30) à la première et à la deuxième lignes partielles (51, 52) est prévu de manière à ce que le module de pince ampérimétrique (30) entoure dans le même sens la première et la deuxième lignes partielles (51, 52).

4. Dispositif (10) selon l'une quelconque des revendications précédentes, **caractérisé en ce que** le module de prélèvement (20) est réalisé comme sonde munie d'un premier élément de prélèvement (21) et d'un deuxième élément de prélèvement (22).

5. Dispositif (10) selon l'une quelconque des revendications précédentes, **caractérisé en ce que** le dispositif (10) est configuré de manière à ce que le premier et le deuxième endroits de prélèvement (61, 62) soient éloignés l'un de l'autre de 2 cm à 200 cm, préférentiellement de 5 cm à 50 cm, plus préférentiellement de 8 cm à 15 cm, encore plus préférentiellement de 10 cm.

6. Dispositif (10) selon l'une quelconque des revendications précédentes, **caractérisé en ce que** le dispositif (10) présente un interrupteur à bascule (11), dans lequel l'interrupteur à bascule (11) entraîne une permutation, du point de vue de la commutation, des éléments de prélèvement (21, 22) du module de prélèvement (20).

7. Dispositif (10) selon l'une quelconque des revendications précédentes, **caractérisé en ce que** le dispositif (10) présente un amortisseur de découplage de 40 dB +/- 0,1 dB de 30 kHz à 30 MHz.

8. Utilisation d'un dispositif (10) selon l'une quelconque des revendications précédentes pour la réalisation d'une mesure sur la ligne de transmission de données (50).

9. Utilisation selon la revendication 8, **caractérisée en ce que** la ligne de transmission de données (50), pendant la réalisation de la mesure, est utilisable sans interruption pour la transmission de données.

10. Utilisation selon la revendication 8 ou 9, **caractérisé en ce qu'**une ligne double en cuivre, de préférence une ligne double torsadée en cuivre, est utilisée comme ligne de transmission de données (50).

11. Utilisation selon l'une quelconque des revendications 8 à 10, **caractérisée en ce qu'**un analyseur de spectre (40) destiné à mesurer la densité de puissance spectrale du signal à haute fréquence transmis sur la ligne de transmission de données (50) est raccordé au dispositif (10).

12. Utilisation selon la revendication 11, **caractérisée en ce que** le dispositif (10) est adapté à différentes impédances d'entrée de l'analyseur de spectre (40.

13. Procédé de découplage
- d'un signal à haute fréquence transmis sur une ligne de transmission de données (50), dans lequel la ligne de transmission de données (50) présente une première ligne partielle (51) et une deuxième ligne partielle (52), ou
- de tensions parasites
au moyen d'un dispositif (10) qui présente un module de prélèvement (20), un module de pince ampérimétrique (30) et une sortie (14),
le procédé présentant les étapes consistant à :
- raccorder le module de prélèvement (20) à la première et à la deuxième lignes partielles (51, 52) au niveau d'un premier endroit de prélèvement (61) de la ligne de transmission de données (50) pour le découplage du signal à haute fréquence ou des tensions parasites ;
- coupler le module de pince ampérimétrique (30) à la première ligne partielle (51) au niveau d'un deuxième endroit de prélèvement (62) de la ligne de transmission de données (50) pour le découplage du signal à haute fréquence ; et
- couler le module de pince ampérimétrique (30) à la première et à la deuxième lignes partielles (51, 52) au niveau d'un deuxième endroit de prélèvement (62) de la ligne de transmission de données (50) pour le découplage des tensions parasites ;
- adaptater la sortie (14) à différentes impédances d'entrée d'un dispositif raccordé à la sortie (14).
